(19) Europäisches Patentamt / European Patent Office / Office européen des brevets

(11) **EP 4 186 589 B1**

(12) **FASCICULE DE BREVET EUROPEEN**

(45) Date de publication et mention de la délivrance du brevet:
**19.03.2025 Bulletin 2025/12**

(51) Classification Internationale des Brevets (IPC):
***B01J 6/00*** *(2006.01)*     ***C10B 49/04*** *(2006.01)*
***C10B 53/02*** *(2006.01)*

(21) Numéro de dépôt: **22208877.5**

(22) Date de dépôt: **22.11.2022**

(52) Classification Coopérative des Brevets (CPC):
**C10B 47/40; C10B 53/02; C10B 57/14; C10L 5/363; C10L 5/40; C10L 9/083**

(54) **INSTALLATION ET PROCÉDÉ AFFÉRENT DE PRODUCTION DE GRANULÉS DE BIOMASSE HYDROPHOBES**

ANLAGE UND VERFAHREN ZUR HERSTELLUNG VON HYDROPHOBEN BIOMASSEPELLETS

PLANT AND RELATIVE METHOD FOR PRODUCING HYDROPHOBIC BIOMASS PELLETS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.11.2021 FR 2112665**

(43) Date de publication de la demande:
**31.05.2023 Bulletin 2023/22**

(73) Titulaire: **Commissariat à l'Energie Atomique et aux Energies Alternatives
75015 Paris (FR)**

(72) Inventeurs:
• **CHATROUX, André
38054 GRENOBLE CEDEX 09 (FR)**
• **THIERY, Sébastien
38054 GRENOBLE CEDEX 09 (FR)**

(74) Mandataire: **Cabinet Nony
11 rue Saint-Georges
75009 Paris (FR)**

(56) Documents cités:
RU-C2- 2 650 113     US-A1- 2015 275 115
US-A1- 2020 056 098

## Description

### Domaine technique

La présente invention concerne le domaine général de la fabrication de granulés biocombustibles à partir d'une biomasse, plus particulièrement de la biomasse lignocellulosique.

Par « biomasse », on entend ici et dans le cadre de l'invention, l'ensemble des matières organiques utilisées à des fins énergétiques ou agronomiques.

On entend par « matière organique » l'ensemble de la matière vivante qui peut être broyée pour former des granulés, à savoir les matières d'origine végétale comprenant les déchets organiques issus de l'agriculture et de la sylviculture, déchets agricoles, résidus alimentaires, bois, racines, feuilles, les déchets organiques ménagers ou industriels, les boues des stations d'épuration les champignons et les matières d'origine animale (fumier animal).

L'invention a trait plus particulièrement à la production de granulés hydrophobes, c'est-à-dire qui vont très peu absorber d'eau s'ils sont stockés en ambiance humide.

Pour respecter les normes en vigueur, on peut qualifier un granulé hydrophobe au sens de l'invention s'il absorbe moins de 10% de sa masse en eau...

### Technique antérieure

Dans un contexte où la consommation énergétique ne cesse d'augmenter, la valorisation de la biomasse est envisagée afin de diversifier les ressources d'énergies et de réduire les émissions de gaz à effet de serre.

Dans l'objectif de standardiser les équipements pouvant utiliser cette biomasse, le conditionnement de cette ressource sous forme de granulés est un progrès majeur.

Cette opération de granulation aussi appelée pelletisation consiste à assembler ou agglomérer de fines particules solides de biomasse afin de former des éléments de plus grandes dimensions (sphères, briquettes ou encore granulés cylindriques).

Pour réaliser cette opération de granulation, on met en œuvre généralement une presse à granulés notamment annulaire telle que décrite par exemple dans le brevet US4838779.

D'autres équipements tels qu'une vis sans fin comme décrite dans le brevet JP2013000940 peuvent être utilisés.

De nombreuses améliorations ont été apportées à ces équipements. On peut citer ici le brevet US4711622 qui porte sur l'ajout d'un déflecteur dirigeant la poudre sous un galet presseur, le brevet FR2359701B1 qui concerne l'utilisation de galets de différents diamètres pour améliorer la capacité de production ou encore la demande de brevet WO2011/50987 qui se rapporte à une conception modulaire pour faciliter la maintenance.

Le principe général de fonctionnement de ces équipements reste cependant le même et consiste à comprimer la poudre de biomasse dans des filières dont le diamètre correspond à celui des granulés produits. Le point commun notable à toutes ces presses à granulés est l'échauffement dû à l'étape de compression en elle-même. Il convient donc de noter que les granulés en sortie de ces presses présentent une température comprise entre 80 et 100°C et sont refroidis avant leur emballage.

L'avantage essentiel de granulés de biomasse est qu'ils peuvent facilement être manipulés, transportés ou stockés à condition de rester toujours protégés de l'humidité. Ils ont en effet une forte capacité à absorber l'humidité. Un granulé de biomasse immergé dans de l'eau peut absorber jusqu'à 150% de sa masse sèche. Cette absorption entraîne également des conséquences négatives sur sa tenue mécanique qui se réduit rapidement et peut aboutir à sa désagrégation.

Il y a donc un fort intérêt à produire des granulés hydrophobes, c'est-à-dire résistants à l'eau, et peu de solutions ont été proposées à cette fin dans l'état de la technique.

La demande de brevet WO2014/152931 décrit une méthode comprenant l'ajout d'un additif suivi d'un traitement thermique par micro-ondes dans une gamme de température entre 50 et 230°C. Un des avantages de ce procédé est de rester à relativement basse température et donc de pouvoir être réalisé sous air.

Il est connu également la torréfaction, en tant qu'autre technique, permettant d'obtenir une bonne hydrophobicité sans additif, qui consiste en un traitement thermique différent et à plus haute température. La torréfaction est un traitement thermique doux de la biomasse à l'interface entre le séchage et la pyrolyse, et qui vise à éliminer l'eau et à modifier une partie de la matière organique de la biomasse pour casser ses fibres. Autrement dit, ce traitement thermique doux altère la structure fibreuse de la biomasse. La torréfaction est réalisée en absence d'oxygène, généralement réalisé à des températures comprises entre 200 et 350°C et sa durée est généralement de 30 à 60mn.

Comme expliqué dans le brevet FR302422B1, il est notoirement reconnu que la torréfaction améliore les propriétés de la biomasse, en vue de son stockage en lui conférant un caractère hygrophobe et une résistance aux dégradations biologiques.

Les unités de torréfaction industrielles sont conçues pour traiter une grande variété de biomasses, généralement sous forme de plaquettes forestières ou résidus agricoles. Ces unités peuvent potentiellement torréfier des granulés de biomasse mais elles ne sont souvent pas étudiées et optimisées pour cela. Le niveau de torréfaction appliqué dans ces unités, c'est-à-dire la température et la durée du traitement thermique, est plutôt fort car l'objectif est la production d'une biomasse avec un meilleur taux de carbone, donc un meilleur pouvoir calorifique (PCI). Ce traitement thermique sèche totalement la biomasse ce qui entraine une production de vapeur d'eau. Il y a également une perte de masse sèche sur la biomasse torréfiée compensée par la création d'un gaz de torréfaction composé majoritairement de $CO_2$ et CO. Plus le niveau de torréfaction est élevé, plus le gaz de torréfaction contient du gaz combustible sous forme de CO, voire de $CH_4$ et d'$H_2$ dans la gamme 300-350°C.

La plupart des brevets sur cette technologie concerne l'intégration énergétique et valorisation de ce gaz de torréfaction combustible.

C'est par exemple le cas du brevet FR3024221B1 précité qui intègre deux brûleurs et des échangeurs thermiques permettant de faire fonctionner une unité de séchage de la biomasse avant torréfaction.

Le brevet FR2982273B1 présente une optimisation énergétique plus simple avec récupération de la chaleur de la combustion des gaz de torréfaction qui sont directement renvoyés pour partie dans l'unité de torréfaction, et pour le reste dans l'unité de séchage.

L'installation de torréfaction mise en œuvre dans ce brevet FR2982273B1 consiste en des fours à plateau, avec des bras qui brassent et entrainent la biomasse d'un plateau à l'autre. La vitesse de rotation des bras détermine le temps de séjour moyen mais le brassage réalisé conduit à une forte dispersion sur le temps de séjour de la biomasse.

La demande de brevet WO2013/03960 décrit quant à elle une unité de torréfaction un four à tambour rotatif, incliné dans lequel la biomasse est introduite en partie haute et descend vers la sortie du four entrainée par la gravité et le mouvement de rotation. Comme dans le brevet FR2982273B1, les gaz de torréfaction, sont brûlés et réintroduits dans l'unité de torréfaction pour en assurer le chauffage mais aussi pour maintenir une absence d'oxygène dans l'unité de torréfaction.. Également, comme dans le brevet FR2982273B1, le brassage de la biomasse par un tambour rotatif induit une dispersion de temps de séjour de la biomasse traitée.

A contrario, la demande de brevet WO2016/116588 décrit une méthode permettant de bien maitriser le temps de séjour en réalisant la torréfaction de biomasse par lot (batch), c'est-à-dire que la biomasse est introduite dans le four froid en une fois puis évacuée également en une fois après traitement thermique. C'est une méthode habituellement utilisée dans les études de laboratoire mais dont la demande de brevet cherche à en faire un procédé industriel. Cette demande de brevet décrit par ailleurs l'utilisation d'une pompe à vide pour faire baisser le taux d'oxygène avant torréfaction puis, pour extraire les gaz produits durant le traitement thermique.

Un tel traitement de la biomasse en batch est utilisé dans de nombreux dispositifs de laboratoire comme celui décrit dans le brevet FR2985043 dont l'objectif est de pouvoir réaliser une torréfaction rapide d'un échantillon de biomasse. Le diamètre de l'échantillon est mesuré et une optimisation de la température et de la durée de torréfaction est faite à partir de formules mathématiques dans un objectif de prétraitement avant gazéification.

Ainsi, une étude de l'état de l'art sur la torréfaction montre qu'il existe des procédés permettant de torréfier de la biomasse, et donc des granulés de biomasse, mais il n'y a pas eu d'optimisation visant l'objectif précis de l'hydrophobicité de granulés de biomasse.

Plutôt que de torréfier des granulés, la publication [1] détaille l'intérêt de réaliser une granulation (pelletisation) après l'opération de torréfaction. Si aucun additif n'est utilisé pour faciliter la pelletisation, les granulés de biomasse torréfiée obtenus doivent avoir de bonnes propriétés hydrophobes. Sans aborder spécifiquement ce sujet d'hydrophobicité, cette étude de laboratoire démontre l'intérêt énergétique et technico-économique de produire des granulés torréfiés, mais elle ne donne pas de solution technique.

La demande de brevet US2014/0082998 divulgue une installation comprenant un sécheur, un torréfacteur relié en aval du sécheur, un broyeur en aval du torréfacteur et en aval, une presse de pelletisation. Dans cette demande, il y a une optimisation thermique car les gaz de torréfaction sont récupérés pour le chauffage, ce qui n'est applicable que si le niveau de torréfaction est important de façon à avoir suffisamment de CO pour rendre le gaz de torréfaction combustible. Le four utilisé est du type à tambour rotatif qui comme mentionné précédemment a l'inconvénient de ne pas garantir une durée de torréfaction précise. Dans cette demande également, l'air est simplement chassé par la vapeur d'eau émise par la biomasse chauffée.

En complément de cet état de l'art, les inventeurs de la présente invention ont procédé à une étude de laboratoire spécifiquement dédiée à la mesure d'absorption d'eau par des granulés de bois préalablement torréfiés. L'étude a consisté en une torréfaction courte et maitrisée en température sur des échantillons représentatifs de granulés. Un dispositif expérimental spécifique a été réalisé et les résultats obtenus diffèrent de ce qui était communément estimé par les experts du domaine.

En effet, il est communément admis par les experts de ce domaine technique que l'hydrophobicité de la biomasse s'améliore continument avec le niveau de torréfaction et donc qu'une bonne hydrophobicité nécessite un fort niveau de torréfaction. Il y a d'ailleurs des études qui le confirment comme [2] qui analyse les propriétés de granulés de pin torréfiés durant 60mn à des températures de 240 à 340°C et montre une amélioration continue de la résistance à l'humidité.

Les auteurs de l'étude [3] montrent que pour une même durée de torréfaction de 30mn, une amélioration de l'hydrophobicité sur 4 températures de torréfaction (230°C, 250°C, 270°C, 290°C) et concluent qu'il convient de dépasser 270°C pour un résultat correct (<15% de reprise d'humidité).

Pour les inventeurs de la présente invention, ces études sont biaisées par la difficulté de bien maitriser le taux de torréfaction des échantillons analysés. En effet, si les tests de reprise d'humidité sont réalisés sur des échantillons dans lequel une partie des granulés n'a pas bien été torréfié, alors ces derniers vont absorber beaucoup d'eau, typiquement jusqu'à 150% de leur masse. Même s'il y a très peu de granulés mal torréfiés, cela impacte très fortement la mesure moyennée sur l'ensemble de l'échantillon.

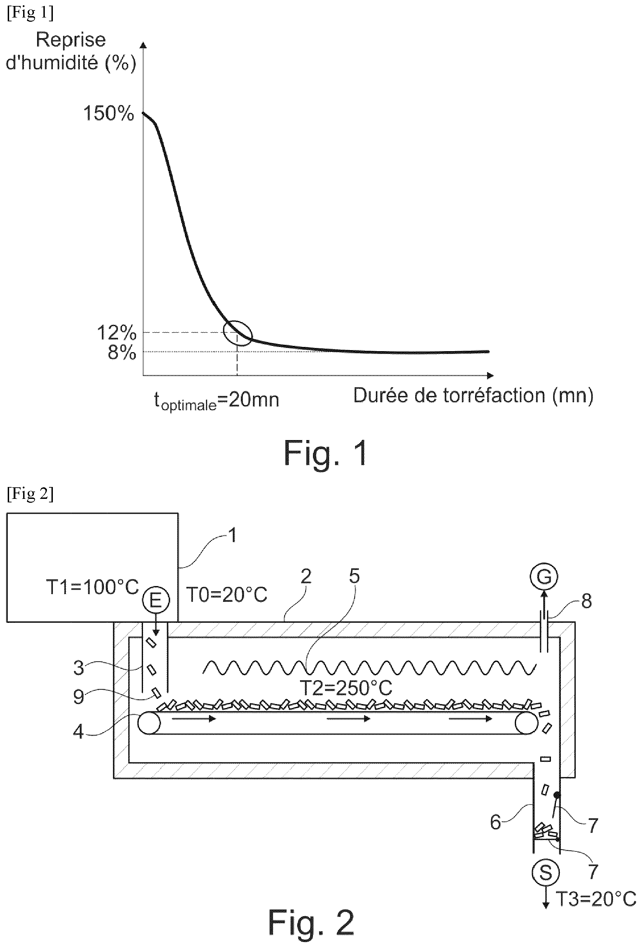

Or, comme le montre la courbe de la figure 1, l'étude menée par les inventeurs sur des granulés de bois met en évidence que l'hydrophobicité s'améliore fortement en début de torréfaction, passe par un optimum au bout de 20mn puis ne s'améliore pratiquement plus si la torréfaction est poursuivie plus longtemps.

L'optimum sur la courbe est le point de fonctionnement permettant d'obtenir un granulé de bonne hydrophobicité tout en conservant un maximum de sa capacité de chauffage car moins la torréfaction est longue et moins le granulé traité perd de la masse et donc de l'énergie.

En conclusion, la conception d'une installation système destiné à produire des granulés de biomasse hydrophobes peut être optimisée car elle nécessite une torréfaction courte, typiquement de 20 mn, à relativement faible température, typiquement de 230 à 250°C, et avec une bonne maitrise du temps de séjour. Ce sont des conditions de fonctionnement particulières pour lesquels l'état de l'art précédemment mentionné montre que les torréfacteurs industriels ne sont pas adaptés.

Par contre, il est intéressant de constater que ces conditions optimales sont proches de celles utilisées pour la torréfaction du café qui dure également de l'ordre de 20mn mais à plus basse température, entre 160 et 220°C. De plus, celle-ci ne nécessite pas d'être réalisée en conditions inertes et les brevets associés décrivent donc des systèmes de torréfaction sous air. Par exemple, le brevet FR1182626 est un torréfacteur de café comprenant un tapis composé de plateaux vibrants de façon à exposer toutes les faces des grains à la chaleur d'un rayonnement infrarouge. Le brevet FR2213019 est un système de torréfaction de café à l'air libre avec un tapis roulant et chauffage infra-rouge ou ultra-sons. Enfin, le brevet FR2390202 décrit un principe de torréfaction de café en lit fluidisé (dans un flux d'air chaud) avec un tapis comprenant des palettes pour entrainer les grains de l'entrée vers la sortie. Aucun de ces systèmes ne pourrait convenir pour torréfier des granulés de biomasse puisqu'ils ne sont pas étanches à l'air.

La demande de brevet US 2015/275115 A1 décrit un procédé de torréfaction de biomasse dans lequel la biomasse est introduite dans un lit fluidisé ou un réacteur à lit non fluidisé et chauffée à une température prédéterminée dans un environnement oxydant.

La demande de brevet US 2020/056098 A1 décrit un système et un procédé permettant de torréfier une combinaison de biomasse et de dispersion colloïdale de biocharbon.

Il existe donc un besoin de proposer une solution technique optimisée pour la production de granulés de biomasse hydrophobes.

Le but de l'invention est donc de répondre au moins en partie à ce besoin.

**Exposé de l'invention**

Pour ce faire, l'invention concerne, sous l'un de ses aspects, une installation de production de granulés de biomasse hydrophobes, comprenant :

- une unité de pelletisation comprenant une sortie par laquelle des granulés de biomasse sont destinés à être évacués à une température donnée;

- un four de torréfaction comprenant une entrée reliée à la sortie de l'unité de pelletisation et une sortie par laquelle les granulés de biomasse torréfiés sont destinés à être évacués, le four de torréfaction comprenant :

  • une enveloppe étanche et isolée thermiquement,

  • au moins un dispositif de convoyage des granulés de biomasse logé à l'intérieur de l'enveloppe étanche et configuré pour garantir un temps de séjour identique pour tous les granulés de biomasse entre l'entrée et la sortie,

  • au moins un système de chauffage logé à l'intérieur de **l'enveloppe** étanche, le système de chauffage étant configuré pour maintenir l'intérieur de l'enveloppe à une température de torréfaction sensiblement constante,

  • à sa sortie, au moins un dispositif d'étanchéité au gaz configuré pour évacuer les granulés de biomasse torréfiés tout en assurant une étanchéité au gaz.

Selon un mode de réalisation avantageux, la sortie du four comprend au moins un dispositif d'étanchéité au gaz configuré pour évacuer les granulés de biomasse torréfiés tout en assurant une étanchéité au gaz.

Selon ce mode, le dispositif d'étanchéité au gaz peut avantageusement être constitué de deux vannes montées basculantes l'une en aval de l'autre dans la sortie du four en formant un sas, de sorte à évacuer les granulés de biomasse torréfiés par lot tout en assurant une étanchéité au gaz. Ainsi, pour procéder à l'évacuation, on ouvre la vanne amont de sorte que le volume du sas entre les deux vannes se remplisse d'un lot de granulés de biomasse, la vanne aval étant fermée. Puis, on ferme la vanne amont et on ouvre la vanne aval afin d'évacuer du sas le lot de granulés de biomasse torréfiés. Avantageusement, cette évacuation a lieu uniquement par gravité.

Le dispositif d'étanchéité au gaz peut aussi être constitué par une écluse rotative ou tout autre dispositif mécanique permettant le passage des granulés torréfiés tout en assurant une étanchéité au gaz.

Selon un autre mode de réalisation avantageux, l'enveloppe étanche est percée d'au moins une sortie de gaz par laquelle les gaz issus de la torréfaction sont aspirés.

Selon une configuration avantageuse, le four est agencé en dessous de l'unité de pelletisation, l'entrée du four comprenant au moins une trémie pour évacuer par gravité les granulés depuis l'unité de pelletisation jusqu'au(x) dispositif(s) de convoyage.

Selon une variante avantageuse, la sortie du four comprend au moins une trémie pour évacuer par gravité les granulés torréfiés hydrophobes de l'enveloppe étanche.

Selon un autre mode de réalisation avantageux, l'installation comprend plusieurs dispositifs de convoyage agencés à la suite les uns des autres dans le sens de convoyage à l'intérieur de **l'enveloppe** étanche. Ce mode peut permettre une réduction de la longueur du four de torréfaction et de limiter la surface extérieure du four, donc de réduire les pertes thermiques proportionnelles à cette surface externe du four. Par exemple, en considérant que le four a une forme géométrique de parallélépipède rectangle, cette surface extérieure est minimale si l'on se rapproche de la forme d'un cube.

Chaque dispositif de convoyage est avantageusement constitué d'un tapis roulant perforé. Un tel dispositif permet de maitriser précisément le temps de séjour des granulés dans le four, que l'on souhaite court typiquement de l'ordre de 20 min. En lieu et place d'un tapis roulant, on peut envisager tout autre dispositif dont le convoyage permet un temps de séjour précis. Par exemple, on peut envisager un convoyeur à godet.

L'invention a également pour objet un procédé de production de granulés de biomasse hydrophobes, notamment mis en œuvre par une installation telle que décrite précédemment, comprenant les étapes suivantes :

i/ pelletisation afin d'obtenir des granulés de biomasse à une première température donnée ($T_1$) ;

ii/ injection des granulés de biomasse à la première température donnée ($T_1$) dans un four;

iii/ torréfaction à une deuxième température donnée ($T_2$) dans le four en convoyant simultanément les granulés de biomasse à l'intérieur du four de sorte à garantir un temps de séjour dans le four prédéterminé, sensiblement identique pour tous les granulés, afin d'obtenir des granulés de biomasse hydrophobes;

iv/ évacuation des granulés de biomasse hydrophobes du four.

Avantageusement, la première température donnée ($T_1$) est sensiblement égale à 100°C.

Avantageusement encore, la deuxième température donnée ($T_2$) est sensiblement comprise entre 230 et 250°C.

De préférence, le temps de séjour dans le four est sensiblement compris entre 20 et 25 min.

Selon un mode de réalisation avantageux, le procédé comprend simultanément à l'étape iii/ de torréfaction, une étape v/ d'aspiration des gaz issus de la torréfaction en vue de leur traitement ou d'une épuration avant rejet à l'atmosphère.

Ainsi, l'invention consiste essentiellement à ajouter en aval d'une unité de pelletisation/granulation de biomasse, un four de torréfaction qui loge un ou plusieurs dispositifs de convoyage pour que les granulés de biomasse séjournent au sein du four pendant un temps court et précis afin d'optimiser leur hydrophobicité.

Au final, un selon l'invention présente de nombreux avantages parmi lesquels on peut citer :

- obtention de granulés de biomasse torréfiés hydrophobes dont le taux d'hydrophobie est constant pour tous les granulés ;
- optimisation thermique d'une installation de production de granulés de biomasse hydrophobe par torréfaction directe de granulés dont la température en entrée du four et celle de l'unité de pelletisation, soit typiquement une température comprise entre 80 et 100°C. Cette optimisation peut permettre de gagner jusqu'à 20% d'énergie de chauffage nécessaire à la torréfaction ;

- du fait de l'entrée du four de torréfaction directement reliée en amont à la sortie de l'unité de pelletisation, limitation de l'entrée d'air dans le four de torréfaction et donc pas de nécessité d'installer un système complexe d'étanchéité de type double vanne ou écluse rotative en entrée de four.

D'autres avantages et caractéristiques de l'invention ressortiront mieux à la lecture de la description détaillée d'exemples de mise en œuvre de l'invention faite à titre illustratif et non limitatif en référence aux figures suivantes.

**Brève description des dessins**

[Fig 1] la figure 1 illustre sous forme d'une courbe la décroissance temporelle de la reprise d'humidité de granulés de bois soumis à une torréfaction à relativement faible température.

[Fig 2] la figure 2 est une vue schématique d'une installation de production de granulés de biomasse hydrophobes selon l'invention.

[Fig 3] la figure 3 est une vue schématique d'une installation selon une variante de l'invention.

**Description détaillée**

Dans la description qui va suivre ainsi que dans l'ensemble de la demande, les termes « vertical », « inférieur », « supérieur», « bas », « haut », « dessous » et « dessus » sont à comprendre par référence par rapport à une installation de production de granulés de biomasse hydrophobes, telle qu'elle est en configuration horizontale de fonctionnement, avec l'unité de pelletisation agencée au-dessus du four de torréfaction logeant un dispositif de convoyage à l'horizontal.

Également, les termes « entrée », « sortie » « amont », « aval », sont utilisés par référence avec les sens de transfert de la biomasse, de circulation du gaz de torréfaction dans l'installation de production de granulés hydrophobes selon la présente invention.

La figure 1 a déjà été brièvement commentée en préambule. Pour éviter le biais des études comme celle de [2], les inventeurs de la présente invention ont développé un four de torréfaction en batch permettant de réaliser des échantillons conditionnées, représentatifs d'environ 30g chacun et avec une très bonne homogénéité de torréfaction et surtout des vitesses de montée et descente en température très rapide.

Grâce à ces échantillons fiables, la courbe de reprise d'humidité de la figure 1 a été tracée et a mis en évidence la notion d'optimum de torréfaction pour l'hydrophobicité.

Suite à l'obtention de cet optimum à un niveau de torréfaction faible, de l'ordre de 20mn à 250°C pour des granulés de résineux, les inventeurs ont cherché une installation de production qui pourrait permettre d'atteindre un tel point optimum de fonctionnement lors de la torréfaction. Or, en faisant l'inventaire des unités de torréfaction existantes, ils ont en conclu qu'aucune d'entre elles ne pouvait le faire.

A ce niveau de torréfaction, la quantité de gaz de torréfaction produite est faible, il contient moins de 15% de CO combustible, d'où une très faible capacité thermique. Il n'est donc pas rentable économiquement d'essayer de le valoriser par récupération de la chaleur de sa combustion contrairement à ce qui est généralement mis en œuvre dans les unités de torréfaction industrielles.

Sur la figure 1, le point optimum à 20mn et 250°C a été obtenu pour des granulés de résineux. Mais en fonction de la biomasse composant les granulés, les inventeurs ont trouvé que ces conditions optimales peuvent légèrement varier. Par exemple, sur des granulés de feuillus, la température de torréfaction optimale est de 230°C pour une même durée de 20mn. Cependant, cela reste dans la gamme basse des niveaux de température de torréfaction et la quantité d'énergie de chauffage pour réaliser le traitement thermique est faible, c'est un des avantages du système proposé.

Comme vu précédemment, la maitrise du temps de séjour de granulés dans un four de torréfaction est un paramètre essentiel et ils ont donc testé les unités de torréfaction connues.

Les inventeurs ont ainsi procédé à un essai de torréfaction de 25mn dans un four à tambour à plateaux et ils ont estimé que 25% des granulés testés ne présentaient pas un degré de torréfaction suffisant. En effet, les mesures de reprises d'humidité sur quelques échantillons ont donné une moyenne de 44% d'absorption d'eau, ce qui est de l'ordre de grandeur du calcul théorique où 25% des granulés prennent 150% d'humidité et 75% des granulés ne reprennent que 12% d'humidité, soit $\frac{25 \times (1+1.5) + 75 \times (1+0.12)}{100} = +46\%$.

Les inventeurs ont en conclu qu'à cause du brassage des granulés qu'ils induisent, les fours à plateaux ou les tambours rotatifs selon l'état de l'art, ne permettent pas d'obtenir une homogénéité d'hydrophobie dans les granulés torréfiés.

Ils ont alors pensé à réaliser une installation de production avec un four de torréfaction dans lequel les granulés issus d'une unité de torréfaction seraient mis sur un dispositif de convoyage qui permet de soumettre chacun des granulés au chauffage et ce de manière homogène et de maitriser le temps de séjour desdits granulés dans le four.

La figure 2 illustre une installation de production de granulés de biomasse hydrophobes selon l'invention, agencée dans un environnement à la température T0.

Dans cette installation, la sortie d'une unité de pelletisation 1 est directement raccordée à l'entrée E d'un four de torréfaction 2, agencé en-dessous de l'unité de pelletisation. Plus précisément l'entrée E comprend une trémie 3 pour évacuer par gravité les granulés depuis l'unité de pelletisation jusqu'au(x) dispositif(s) de convoyage.

Le four de torréfaction comprend tout d'abord une enveloppe étanche et isolée thermiquement 2.

Au moins un dispositif de convoyage 4 est logé à l'intérieur de l'enveloppe étanche 2. Comme expliqué par la suite le ou les dispositifs de convoyages est(sont) configuré(s) pour garantir un temps de séjour identique pour tous les granulés de biomasse entre l'entrée E et la sortie S du four. Chaque dispositif est de préférence un tapis roulant métallique perforé. Tout autre équipement permettant de réponde au critère de garantie du temps de séjour dans le four, identique peut convenir.

Un système de chauffage 5 est également logé à l'intérieur de l'enveloppe étanche, le système de chauffage étant configuré pour maintenir l'intérieur de l'enveloppe 2 à une température de torréfaction T2 sensiblement constante. De nombreuses solutions techniques sont possibles pour assurer cette fonction du maintien à une température T2, comme un chauffage électrique au moyen de résistances électriques, par combustion de gaz, au moyen d'un échangeur thermique, etc... De même, l'homogénéité du chauffage au sein de **l'enveloppe** 2 peut nécessiter un brassage par un dispositif de ventilation qui peut être intégré dans le système de chauffage 5.

La qualité de l'isolation thermique de l'enveloppe 2 permet de limiter la perte d'énergie au travers du four mais également pour éviter la condensation de goudrons. Dans le cadre de l'invention, le fait que la température T2 soit dans la gamme basse des températures de torréfaction usuelles, typiquement comprise entre 230 et 250°C est un avantage technique car les pertes thermiques sont proportionnelles à l'écart de température T2-T0 et la réalisation d'une enveloppe 2 avec une bonne isolation thermique d'un four à 250°C est relativement aisée avec des matériaux classiques.

La sortie S du four peut comprendre une trémie de sortie 6 afin d'évacuer les granulés de biomasse en fin de traitement thermique de torréfaction vers un environnement à la température T3. Cette sortie S peut comprendre au moins un dispositif d'étanchéité au gaz 7 configuré pour évacuer les granulés de biomasse torréfiés tout en assurant une étanchéité au gaz.

Comme illustré, ce dispositif 7 peut être constitué de deux vannes montées basculantes l'une en aval de l'autre dans la sortie S du four en formant un sas, de sorte à évacuer les granulés de biomasse torréfiés par lot tout en assurant une étanchéité au gaz.

Ainsi, le dispositif 7 permet de contenir le gaz de torréfaction dans l'enveloppe 2 du four. Ce gaz est potentiellement dangereux et polluant, car il contient du monoxyde de carbone CO et des goudrons sous forme vapeur. L'évacuation de ce gaz G peut être réalisée par un orifice de sortie de gaz 8 réalisé par perçage à travers la paroi du haut de l'enveloppe 2. De fait, le gaz G peut être aspiré par cet orifice 8 pour un traitement ultérieur ou une combustion avant rejet à l'atmosphère. L'aspiration doit être suffisante pour éviter un rejet de gaz par les éventuelles fuites de l'enveloppe.

On décrit maintenant les étapes de fonctionnement de l'installation de production pour obtenir des granulés torréfié hydrophobes.

Etape i/: on réalise une pelletisation dans l'unité 1 afin d'obtenir des granulés de biomasse 9 à une température donnée T1.

Etape ii/ : les granulés de biomasse 9 à la température T1 dans l'enveloppe 2 sont évacués par gravité au moyen de la trémie d'entrée 3.

Etape iii/ : on procède à la torréfaction par le système de chauffage 5 à une température donnée T2 dans le four. Simultanément à la mise en œuvre du chauffage, les granulés de biomasse 9 sont convoyés par le dispositif de convoyage 7 à l'intérieur du four de sorte à garantir un temps de séjour dans le four. Ce temps de séjour prédéterminé est sensiblement identique pour tous les granulés, afin d'obtenir des granulés de biomasse hydrophobes 9.

Simultanément à l'étape iii/ de torréfaction, on réalise une étape d'aspiration des gaz G issus de la torréfaction par l'orifice 8 en vue de leur traitement ou d'une épuration avant rejet à l'atmosphère.

Etape iv/ : les granulés de biomasse hydrophobes 9 sont évacués par gravité par la trémie de sortie 6. Plus précisément, on ouvre la vanne amont du dispositif 7 de sorte que le volume du sas entre les deux vannes se remplisse d'un lot de granulés de biomasse, la vanne aval du dispositif 7 étant fermée. Puis, on ferme la vanne amont et on ouvre la vanne aval afin d'évacuer par gravité du sas le lot de granulés de biomasse torréfiés.

L'intégration énergétique de l'unité de pelletisation 1 dans une installation de four de torréfaction permet un gain sur le chauffage qui peut être estimé par calcul en connaissant la chaleur massique de la biomasse, typiquement du bois

($Cp_{bois}$), la chaleur massique de l'eau liquide ($CP_{eau}$), la chaleur massique de la vapeur ($Cp_{vapeur}$) et la chaleur latente de vaporisation de l'eau ($Lv_{eau}$).

Considérant que les granulés de bois contiennent $HR_\%$ d'humidité en entrée de four de torréfaction 2, l'énergie $E_{torref}$ nécessaire pour les porter de la température T0 à T2 est donnée par l'équation 1:

[Equation 1]

$$E_{torref} = [HR_\% \times Cp_{eau} + (1 - HR_\%) \times Cp_{bois})] \times (100 - T0) + HR_\% \times Lv_{eau}$$
$$+ [HR_\% \times Cp_{vapeur} + (1 - HR_\%) \times Cp_{bois})] \times (T2 - 100)$$

L'énergie gagnée par l'intégration thermique est celle contenue dans le granulé à la température T1. Elle est donnée par l'équation 2 :

[Equation 1]

$$E_{granulé} = [HR_\% \times Cp_{eau} + (1 - HR_\%) \times Cp_{bois})] \times (T1 - T0)$$

$$R = \frac{E_{granulé}}{E_{torref}}$$

Le gain R en pourcentage peut être calculé par la rapport . Il peut varier de 10 à 35% suivant les conditions de production des granulés. Un tel gain constitue un avantage économique très important puisque le coût du chauffage est le principal poste de dépense d'exploitation de l'installation.

A titre d'exemple illustratif, la température extérieure T0 = T3 est égale à 20°C, la température des granulés en sortie d'unité de pelletisation T1 est égale à 100°C, la température de torréfaction T2 est égale à 250°C, le temps de séjour des granulés dans le four étant compris entre 20 et 25 min.

La teneur en humidité d'un granulé en entrée de four de torréfaction 2 est considérée à 30%.

Les autres valeurs numériques sont : $Cp_{bois}$ = 1.5 *kJ/kg/K*, $CP_{eau}$ = 4.0 *kJ/kg/K*, $Cp_{vapeur}$ = 4.4 *kJ/kg/K* et $Lv_{eau}$ = 2250 *kJ/kg*.

Avec ces valeurs, il est possible de calculer le gain d'énergie de chauffage avec les équations précédentes :

$$E_{torref} = 1210 \; kJ/kg$$

$$E_{granulé} = 180 \; kJ/kg$$

$$R = 15\%$$

Autrement dit, avec des granulés contenant 30% d'humidité en entrée de four 2, le gain énergétique R de l'intégration du four 2 à la sortie d'une unité de pelletisation est de 15%.

En extrapolant, ce gain R serait de 20% pour des granulés qui ne contiendraient que 14% d'humidité car plus les granulés en entrée sont secs, plus le gain est important. Il est à noter que ce gain est un minimum car le calcul réalisé ne tient pas compte des réactions exothermiques qui se déroulent durant la torréfaction.

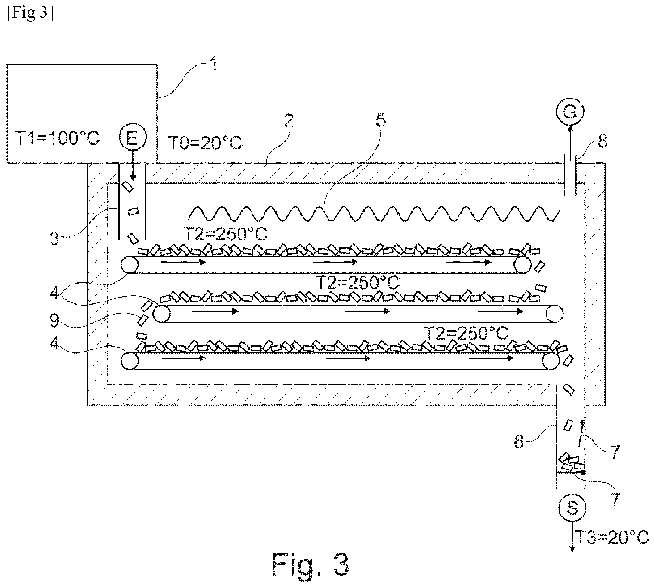

La figure 3 illustre une variante intégrant plusieurs systèmes de convoyage 7. Cela permet de diminuer la taille de l'unité de torréfaction et de limiter la surface extérieure du four, donc de réduire les pertes thermiques.

L'invention n'est pas limitée aux exemples qui viennent d'être décrits ; on peut notamment combiner entre elles des caractéristiques des exemples illustrés au sein de variantes non illustrées.

D'autres variantes et modes de réalisation peuvent être envisagés sans pour autant sortir du cadre de l'invention.

**Liste des références citées**

[1]: « Combined torrefaction and pelletisation. The TOP process » de P.C.A. BERGMAN (2005).

[2]: J.H. Peng & al. « Study on density, hardness, and moisture uptake of torrefied wood pellets » (2013).

[3]: Maryam Manouchehrinejad, Sudhagar Mani « Torrefaction after pelletization (TAP): Analysis of torrefied pellet quality and co-products », Biomass and Bioenergy, (2018): 93-104.

**Revendications**

1. Installation de production de granulés de biomasse hydrophobes, comprenant :

   - une unité de pelletisation (1) comprenant une sortie par laquelle des granulés de biomasse (9) sont destinés à être évacués à une température donnée (T1);
   - un four de torréfaction comprenant une entrée (E) reliée à la sortie de l'unité de pelletisation et une sortie (S) par laquelle les granulés de biomasse torréfiés (9) sont destinés à être évacués, le four de torréfaction comprenant :

      • une enveloppe étanche et isolée thermiquement (2),
      • au moins un dispositif de convoyage (4) des granulés de biomasse (9) logé à l'intérieur de l'enveloppe étanche et configuré pour garantir un temps de séjour identique pour tous les granulés de biomasse entre l'entrée (E) et la sortie (S),
      • au moins un système de chauffage (5) logé à l'intérieur de l'enveloppe étanche, le système de chauffage étant configuré pour maintenir l'intérieur de l'enveloppe (2) à une température de torréfaction (T2) sensiblement constante,
      • à sa sortie (S), au moins un dispositif d'étanchéité au gaz (7) configuré pour évacuer les granulés de biomasse torréfiés tout en assurant une étanchéité au gaz.

2. Installation selon la revendication 1, le dispositif d'étanchéité au gaz (7) étant constitué de deux vannes montées basculantes l'une en aval de l'autre dans la sortie (S) du four en formant un sas, de sorte à évacuer les granulés de biomasse torréfiés par lot tout en assurant une étanchéité au gaz.

3. Installation selon l'une des revendications précédentes, l'enveloppe étanche (2) étant percée d'au moins une sortie de gaz (8) par laquelle les gaz issus de la torréfaction sont aspirés.

4. Installation selon l'une des revendications précédentes, le four étant agencé en dessous de l'unité de pelletisation, l'entrée (E) du four comprenant au moins une trémie (3) pour évacuer par gravité les granulés depuis l'unité de pelletisation jusqu'au(x) dispositif(s) de convoyage.

5. Installation selon l'une des revendications précédentes, la sortie (S) du four comprenant au moins une trémie (6) pour évacuer par gravité les granulés torréfiés hydrophobes de l'enveloppe étanche.

6. Installation selon l'une des revendications précédentes, comprenant plusieurs dispositifs de convoyage (4) agencés à la suite les uns des autres dans le sens de convoyage à l'intérieur de l'enveloppe étanche (2).

7. Installation selon l'une des revendications précédentes, chaque dispositif de convoyage (4) étant constitué d'un tapis roulant perforé.

8. Procédé de production de granulés de biomasse hydrophobes, notamment mis en œuvre par une installation selon l'une des revendications précédentes, comprenant les étapes suivantes :

   i/ pelletisation afin d'obtenir des granulés de biomasse à une première température donnée (T1) ;
   ii/ injection des granulés de biomasse à la première température donnée (T1) dans un four;
   iii/ torréfaction à une deuxième température donnée (T2) dans le four en convoyant simultanément les granulés de biomasse à l'intérieur du four de sorte à garantir un temps de séjour dans le four prédéterminé, sensiblement identique pour tous les granulés, afin d'obtenir des granulés de biomasse hydrophobes;
   iv/ évacuation des granulés de biomasse hydrophobes du four.

9. Procédé selon la revendication 8, la première température donnée (T1) étant sensiblement égale à 100°C.

10. Procédé selon la revendication 8 ou 9, la deuxième température donnée (T2) étant sensiblement comprise entre 230 et 250°C.

11. Procédé selon l'une des revendications 8 à 10, le temps de séjour dans le four étant sensiblement compris entre 15 et 30 min, de préférence entre 20 et 25 min.

12. Procédé selon l'une des revendications8 à 11, comprenant simultanément à l'étape iii/ de torréfaction, une étape v/ d'aspiration des gaz issus de la torréfaction en vue de leur traitement ou d'une épuration avant rejet à l'atmosphère.

**Patentansprüche**

1. Anlage zur Herstellung von hydrophoben Biomassepellets, umfassend:

   - eine Pelletierungseinheit (1), umfassend einen Auslass, durch den Biomassepellets (9) mit einer gegebenen Temperatur (T1) ausgetragen werden sollen;
   - einen Torrefizierungsofen, umfassend einen Einlass (E), der mit dem Auslass der Pelletierungseinheit verbunden ist, und einen Auslass (S), durch den die torrefizierten Biomassepellets (9) ausgetragen werden sollen, wobei der Torrefizierungsofen umfasst:

     • ein dichtes und thermisch isoliertes Gehäuse (2),
     • mindestens eine Fördervorrichtung (4) für die Biomassepellets (9), die im Innenraum des dichten Gehäuses aufgenommen ist und dazu ausgestaltet ist, eine identische Verweilzeit für alle Biomassepellets zwischen dem Einlass (E) und dem Auslass (S) zu garantieren,
     • mindestens ein Heizsystem (5), das im Innenraum des dichten Gehäuses aufgenommen ist, wobei das Heizsystem dazu ausgestaltet ist, den Innenraum des Gehäuses (2) auf einer im Wesentlichen konstanten Torrefizierungstemperatur (T2) zu halten,
     • an seinem Auslass (S) mindestens eine Gasabdichtungsvorrichtung (7), die dazu ausgestaltet ist, die torrefizierten Biomassepellets auszutragen und dabei eine Gasabdichtung zu gewährleisten.

2. Anlage nach Anspruch 1, wobei die Gasabdichtungsvorrichtung (7) aus zwei Ventilen besteht, die schwenkbar hintereinander in dem Auslass (S) des Ofens gelagert sind, wobei sie eine Schleuse bilden, so dass die torrefizierten Biomassepellets chargenweise ausgetragen werden und dabei eine Gasabdichtung gewährleistet wird.

3. Anlage nach einem der vorhergehenden Ansprüche, wobei das dichte Gehäuse (2) mit mindestens einem Gasauslass (8) durchbohrt ist, durch den die aus der Torrefizierung hervorgegangenen Gase abgesaugt werden.

4. Anlage nach einem der vorhergehenden Ansprüche, wobei der Ofen unter der Pelletierungseinheit angeordnet ist, wobei der Einlass (E) des Ofens mindestens einen Trichter (3) umfasst, um per Schwerkraft die Pellets von der Pelletierungseinheit aus bis zu der(den) Fördervorrichtung(en) auszutragen.

5. Anlage nach einem der vorhergehenden Ansprüche, wobei der Auslass (S) des Ofens mindestens einen Trichter (6) umfasst, um per Schwerkraft die hydrophoben torrefizierten Pellets aus dem dichten Gehäuse auszutragen.

6. Anlage nach einem der vorhergehenden Ansprüche, umfassend mehrere Fördervorrichtungen (4), die in Förderrichtung nacheinander im Innenraum des dichten Gehäuses (2) angeordnet sind.

7. Anlage nach einem der vorhergehenden Ansprüche, wobei jede Fördervorrichtung (4) aus einem perforierten Förderband besteht.

8. Verfahren zur Herstellung von hydrophoben Biomassepellets, das insbesondere von einer Anlage nach einem der vorhergehenden Ansprüche durchgeführt wird, umfassend die folgenden Schritte:

   i/ Pelletieren, um Biomassepellets mit einer gegebenen ersten Temperatur (T1) zu erhalten;
   ii/ Einführen der Biomassepellets mit der gegebenen ersten Temperatur (T1) in einen Ofen;
   iii/ Torrefizieren bei einer gegebenen zweiten Temperatur (T2) in dem Ofen, wobei die Biomassepellets im Innenraum des Ofens gleichzeitig so gefördert werden, dass eine vorbestimmte Verweilzeit in dem Ofen garantiert ist, die für alle Pellets im Wesentlichen identisch ist, um hydrophobe Biomassepellets zu erhalten;
   iv/ Austragen der hydrophoben Biomassepellets aus dem Ofen.

9. Verfahren nach Anspruch 8, wobei die gegebene erste Temperatur (T1) im Wesentlichen 100 °C beträgt.

10. Verfahren nach Anspruch 8 oder 9, wobei die gegebene zweite Temperatur (T2) im Wesentlichen zwischen 230 und 250 °C liegt.

11. Verfahren nach einem der Ansprüche 8 bis 10, wobei die Verweilzeit in dem Ofen im Wesentlichen zwischen 15 und 30 min, bevorzugt zwischen 20 und 25 min liegt.

12. Verfahren nach einem der Ansprüche 8 bis 11, umfassend gleichzeitig mit dem Schritt iii/ des Torrefizierens einen Schritt v/ des Absaugens der aus der Torrefizierung hervorgegangenen Gase im Hinblick auf ihre Behandlung oder eine Reinigung vor ihrer Einleitung in die Atmosphäre.

**Claims**

1. Plant for producing hydrophobic biomass pellets, comprising:

   - a pelletization unit (1) comprising an outlet through which biomass pellets (9) are intended to be discharged at a given temperature (T1);
   - a torrefaction furnace comprising an inlet (E) connected to the outlet of the pelletization unit and an outlet (S) through which the torrefied biomass pellets (9) are intended to be discharged, the torrefaction furnace comprising:

     • a fluidtight and thermally insulated casing (2),
     • at least one conveying device (4) for conveying the biomass pellets (9), which is housed inside the fluidtight casing and configured to ensure an identical residence time for all of the biomass pellets between the inlet (E) and the outlet (S),
     • at least one heating system (5) housed inside the fluidtight casing, the heating system being configured to maintain the inside of the casing (2) at a substantially constant torrefaction temperature (T2),
     • at its outlet (S), at least one gastightness device (7) configured to discharge the torrefied biomass pellets while at the same time ensuring gastightness.

2. Plant according to Claim 1, the gastightness device (7) consisting of two valves pivotably mounted one downstream of the another in the outlet (S) of the furnace, forming an airlock, so as to discharge the torrefied biomass pellets in batches while at the same time ensuring gastightness.

3. Plant according to either of the preceding claims, the fluidtight casing (2) being pierced by at least one gas outlet (8) through which the gases resulting from the torrefaction are extracted.

4. Plant according to one of the preceding claims, the furnace being arranged below the pelletization unit, the inlet (E) of the furnace comprising at least one hopper (3) for discharging the pellets by gravity from the pelletization unit to the conveying device(s).

5. Plant according to one of the preceding claims, the outlet (S) of the furnace comprising at least one hopper (6) for discharging the hydrophobic torrefied pellets by gravity from the fluidtight casing.

6. Plant according to one of the preceding claims, comprising a plurality of conveying devices (4) arranged in succession in the conveying direction inside the fluidtight casing (2).

7. Plant according to one of the preceding claims, each conveying device (4) consisting of a perforated conveyor belt.

8. Process for producing hydrophobic biomass pellets, in particular carried out by a plant according to one of the preceding claims, comprising the following steps:

   i/ pelletization in order to obtain biomass pellets at a first given temperature (T1);
   ii/ injecting the biomass pellets into a furnace at the first given temperature (T1);
   iii/ torrefaction at a second given temperature (T2) in the furnace while simultaneously conveying the biomass pellets inside the furnace so as to ensure a predetermined residence time in the furnace, said residence time being substantially identical for all of the pellets, in order to obtain hydrophobic biomass pellets;

iv/ discharging the hydrophobic biomass pellets from the furnace.

9. Process according to Claim 8, the first given temperature (T1) being substantially equal to 100°C.

10. Process according to Claim 8 or 9, the second given temperature (T2) being substantially between 230 and 250°C.

11. Process according to one of Claims 8 to 10, the residence time in the furnace being substantially between 15 and 30 minutes, preferably between 20 and 25 minutes.

12. Process according to one of Claims 8 to 11, comprising, simultaneously with step iii/ of torrefaction, a step v/ of extracting the gases resulting from the torrefaction in order to treat or purify them before they are released into the atmosphere.

[Fig 1]

Fig. 1

[Fig 2]

Fig. 2

[Fig 3]

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4838779 A
- JP 2013000940 B
- US 4711622 A
- FR 2359701 B1
- WO 201150987 A
- WO 2014152931 A
- FR 302422 B1
- FR 3024221 B1
- FR 2982273 B1
- WO 201303960 A
- WO 2016116588 A
- FR 2985043
- US 20140082998 A
- FR 1182626
- FR 2213019
- FR 2390202
- US 2015275115 A1
- US 2020056098 A1

**Littérature non-brevet citée dans la description**

- **P.C.A. BERGMAN**. *Combined torrefaction and pelletisation. The TOP process*, 2005
- **J.H. PENG**. *Study on density, hardness, and moisture uptake of torrefied wood pellets*, 2013
- **MARYAM MANOUCHEHRINEJAD** ; **SUDHAGAR MANI**. Torrefaction after pelletization (TAP): Analysis of torrefied pellet quality and co-products. *Biomass and Bioenergy*, 2018, 93-104